# EUROPÄISCHE PATENTSCHRIFT

(11) **EP 3 193 688 B1**
(45) Veröffentlichungstag und Bekanntmachung des Hinweises auf die Patenterteilung: **13.06.2018**
(21) Anmeldenummer: 15766476.4
(22) Anmeldetag: 18.09.2015
(51) Int. Cl.: A47J 47/00

(54) **UNTERLAGSLEISTE**
UNDERLAY STRIP
BANDE SUPPORT

(30) Priorität: 19.09.2014 AT 7112014
(43) Veröffentlichungstag der Anmeldung: 26.07.2017
(73) Patentinhaber: Raffalt, Horst Christian, 1140 Wien (AT)
(72) Erfinder: Raffalt, Horst Christian, 1140 Wien (AT)
(74) Vertreter: Puchberger & Partner Patentanwälte
(86) Internationale Anmeldenummer: PCT/EP2015/071451
(87) Internationale Veröffentlichungsnummer: WO 2016/042136

(56) Entgegenhaltungen:
- JP-A- 2008 161 363
- US-A- 5 085 416
- US-A1- 2006 087 067
- US-A1- 2006 093 788
- US-A1- 2007 245 573
- US-B1- 6 478 292

## Beschreibung

Die Erfindung betrifft Unterlagsleisten, die unter einer Auflage, beispielsweise einem Schneidbrett, für Rutschfestigkeit, Stabilität, Hygiene und für einen höheren Arbeitsplatz sorgen.

Derzeit werden nasse Geschirrtücher, Wettex oder dünne Antirutschbodenmatten unterlegt, die die Ansiedelung von Bakterien und Keimen in Fugen und Ritzen ermöglichen. Das widerspricht Hygienevorschriften und verkompliziert das Hygienemanagement.

Diese bekannten Unterlagen liegen außerdem plan auf und weisen nur eine Auflagefläche auf mit kaum Stabilität und Rutschfestigkeit beim Arbeiten.

Weitere Nachteile sind, dass die bekannten Unterlagen gegenüber Chemikalien und Temperaturen über 100 Grad nicht beständig sind und deren mechanische Festigkeit einer Reinigung in einem Geschirrspüler nicht standhält. Sie müssen nach mehrmaliger Verwendung entsorgt werden.

Diese bekannten Unterlagen besitzen keinerlei Steifigkeit um sie im Geschirrspülerkorb standfest platzieren zu können.

Weiters erhöhen diese bekannten dünnen Unterlagen kaum das Schneidbrett und lassen das Anheben des Schneidbrettes insbesondere bei Nässe nur schwer zu. Somit liegen die Schneidbretter stundenlang im Nassen.

Auch werden gewölbte Schneidbretter nur einseitig verwendet, da am Rücken gelegt, das Schneidebrett nur einen Auflagepunkt aufweist und sich beim Schneiden dreht und somit keine Arbeitssicherheit bietet.

Weiters können am Schneidebrett keine harten Schläge, zum Beispiel mit einem Fleischklopfer durchgeführt werden, da das Dämpfungsverhalten fehlt.

Aus dem Stand der Technik sind Schneidbretter mit rutschfesten Unterlagen in mehreren Ausführungen bekannt. Beispielsweise offenbart die US-amerikanische Patentschrift US 6 670 292 B1 ein erhöhtes und rutschfest ausgeführtes Schneidbrett. Ein Schneidbrett mit ähnlichen Merkmalen wird in der US-amerikanischen Patentanmeldung US 2006/0087067 A1 beschrieben. Eine weitere US-amerikanische Patentschrift, die US 5 085 416 zeigt ein Schneidbrett mit einer Zeolith-basierten antibakteriellen Oberfläche. Eine rutschfeste Haltevorrichtung für Schneidbretter wird in der US-amerikanischen Patentanmeldung US 2007/0245573 A1 offenbart. Die japanische Patentanmeldung JP 2008 161363 A beschreibt eine weitere gattungsgemäße Unterlage für Schneidbretter. In der US-amerikanischen Patentanmeldung US 2006/0093788 A1 wird eine wegwerfbare Schneidoberfläche offenbart.

Der Erfindung liegt demnach die Aufgabe zugrunde, eine Unterlage für Schneidbretter zur Verfügung zu stellen, die die oben erwähnten Nachteile nicht aufweist. Die Unterlage soll das Schneidbrett rutschfest machen, stabilisieren und für ein sicheres Arbeiten (schneiden, spalten, hämmer, etc) sorgen, sowie die Möglichkeit bieten, gewölbte Schneidebretter beidseitig zu verwenden. Die Aufgabe der Erfindung ist es auch, die gesetzlichen Hygiene-Bestimmungen in gewerblichen Betrieben, wie Großküchen, zu gewährleisten und zeiteffizient umzusetzen.

Weiters ist es eine Aufgabe der Erfindung, eine angenehme, ergonomische Arbeitshöhe zu ermöglichen sowie nicht plane oder unebene Schneidbretter auszugleichen. Weitere Aufgabe der Erfindung ist es, ein leichtes Ab/Anheben beim Wechseln des Schneidbretts zu ermöglichen.

Diese und weitere Aufgaben werden erfindungsgemäß durch eine Unterlagsleiste aus Silikon mit einer Oberseite und einer im Wesentlichen planen Unterseite gelöst, wobei an der Unterseite der Unterlagsleiste vertiefte Profile vorgesehen sind, die im Wesentlichen gegengleich zu den erhabenen Profilen an der Oberseite ausgeführt sind und wobei das erhabene Profil an oder Oberseite und/oder das gegengleiche vertiefte Profil an der Unterseite in Form seitlich offener konzentrischer Kreise oder in Form einer seitlich offenen Spirale ausgeführt ist.

Dadurch wird erreicht, dass gegebenenfalls am Untergrund oder auf der Unterseite des Schneidbrettes befindliche Feuchtigkeit durch die seitlich offenen Kreise oder die Spirale nach außen gedrückt wird, und sich unter der Unterlagsleiste kein Feuchtigkeitspolster bilden kann, durch welches die Unterlagsleiste oder das Schneidbrett verrutschen würde.

Erfindungsgemäß kann vorgesehen sein, dass die Unterlagsleiste einen trapezförmigen Querschnitt aufweist, dessen Basis die Unterseite der Unterlagsleiste bildet.

Die Verwendung lebensmittelechten Silikons erlaubt eine einfache und hygienische Reinigung der Unterlagsleiste, sowie eine Flexibilität zur Anpassung an inhomogen geformte Untergründe und Schneidbretter. Durch den trapezförmigen Querschnitt, die im Wesentlichen plane Unterseite und das Profil an der Oberseite wird erreicht, dass die Unterlagsleiste stabil am Untergrund haftet und nicht verrutscht.

Die beiden erhöhten Auflageflächen an der Oberseite erlauben eine stabile Lagerung und gleichzeitig eine Hinterlüftung des Schneidbrettes. Die Profile an der Oberseite der Auflageflächen sorgen wiederum dafür, dass das Schneidbrett stabil in Position gehalten wird, und nicht verrutscht.

Erfindungsgemäß kann vorgesehen sein, dass das erhabene Profil an der Oberseite und das vertiefte Profil an der Unterseite derart ausgeführt sind, dass beim Übereinanderstapeln zweier Unterlagsleisten das erhabene Profil der ersten Unterlagsleiste in das vertiefte Profil der zweiten Unterlagsleiste formschlüssig in Eingriff bringbar ist. Dadurch wird erreicht, dass beim Übereinanderstapeln der Unterlagsleisten diese nicht verrutschen und das Schneidbrett stabil getragen wird.

Erfindungsgemäß kann vorgesehen sein, dass die Dicke der Unterlagsleiste im Bereich der erhöhten Auflageflächen mehr als 8mm, bevorzugt 9mm bis 14mm beträgt, und die Dicke der Unterlagsleiste im Bereich außerhalb der erhöhten Auflageflächen weniger als 8mm, bevorzugt 5mm bis 7mm, beträgt. Diese Dicken haben sich in der Praxis als besonders vorteilhaft erwiesen.

Erfindungsgemäß kann vorgesehen sein, dass die Unterlagsleiste einen trapezförmigen Querschnitt aufweist und die Längsseite der Unterlagsleiste mit der Unterseite der Unterlagsleiste einen Winkel von 60°bis 80°, bevor zugt 70°, einschließt.

Erfindungsgemäß kann vorgesehen sein, dass zumindest eine Längskante der Unterlagsleiste im Bereich der Unterseite eine die Steifigkeit erhöhende Verstärkung aufweist. Dadurch wird erreicht, dass eine Längskante der Unterlagsleiste auch zum Abstreifen von Feuchtigkeit oder Schnittmaterial eingesetzt werden kann. Außerdem wird dadurch die Stabilität bei stehender Lagerung, beispielsweise in einem Geschirrspüler, erhöht.

Erfindungsgemäß kann vorgesehen sein, der Querschnitt der Unterlagsleiste kreissegmentförmig, halbkreisförmig, halbkreisförmig mit einer parallel zur planen Unterseite verlaufenden Abflachung, halbovalförmig mit einer parallel zur planen Unterseite verlaufenden Abflachung, oder mehreckig ausgeführt ist.

Erfindungsgemäß kann vorgesehen sein, dass eine Längskante der Unterlagsleiste im Bereich der Oberseite und/oder im Bereich der Unterseite eine Rundung aufweist. Dadurch wird erreicht, dass die Unterlagsleiste in diesen Kantenbereichen nach längerer Beanspruchung keine Risse oder Brüche entwickelt. Derartige Risse oder Brüche in den Kantenbereichen würden die Ansiedlung von Keimen ermöglichen, wodurch eine hygienische Benutzung erschwert wird.

Erfindungsgemäß kann vorgesehen sein, dass die Unterlagsleiste Silikon mit einer Härte im Bereich von 20 Shore-A bis 90 Shore-A, vorzugsweise 55 Shore-A bis 65 Shore-A, besonders bevorzugt 60 Shore-A umfasst. Bei dem Silikon kann es sich um spezielles Silikon handeln, welches für den Einsatz mit ständigem Lebensmittelkontakt geeignet ist.

Insbesondere kann die Unterlagsleiste lebensmittelechtes Silikon der Serie R 401 mit einer Reißfestigkeit nach DIN 53504-S1 von 6,4 MPa, einer Reißdehnung nach DIN 53504-S1 von 400 %, einer Härte nach DIN 53505 von 51 Shore-A, einem Weiterreißwiderstand nach ASTM D624B von 10 N/mm, einer Dichte nach DIN 53479 von 1,13 g/cm3, sowie einer Druckverformungsresistenz nach DIN 53517 von 3% umfassen.

Die Erfindung erstreckt sich weiters auf ein System aus mehreren erfindungsgemäßen Unterlagsleisten wobei die Unterlagsleisten zur Anpassung der gewünschten Arbeitshöhe oder Dämpfung unterschiedliche Dicke aufweisen. Erfindungsgemäß ist vorgesehen, für ein derartiges System mindestens zwei Unterlagsleisten zu verwenden.

Erfindungsgemäß kann vorgesehen sein, dass die Unterlagsleisten eines derartigen Systems zur Anpassung der gewünschten Dämpfung unterschiedliche Härte aufweisen.

Erfindungsgemäß kann auch vorgesehen sein, dass die Unterlagsleisten zur Erfüllung der Anforderungen des HAACP-Konzeptes und der EU-Lebensmittelhygiene-Verordnung ausgeführt sind. Insbesondere können die Unterlagsleisten in unterschiedlichen Farben eingefärbt sein, beispielsweise rot für rohes Fleisch, gelb für Geflügel, blau für rohen Fisch, grün für Salat und Früchte, weiß für Backwaren und Milchprodukte, sowie braun oder orange für Gemüse, um dem Benutzer eine hygienische Benutzung zu erleichtern.

Die Erfindung erstreckt sich weiters auf die Verwendung mehrerer erfindungsgemäßer Unterlagsleisten, wobei die Unterlagsleisten beliebig übereinander gestapelt werden. Die Erfindung wird nun unter Bezugnahme auf ein Ausführungsbeispiel, welches in den Zeichnungen schematisch dargestellt ist, weiter erläutert.

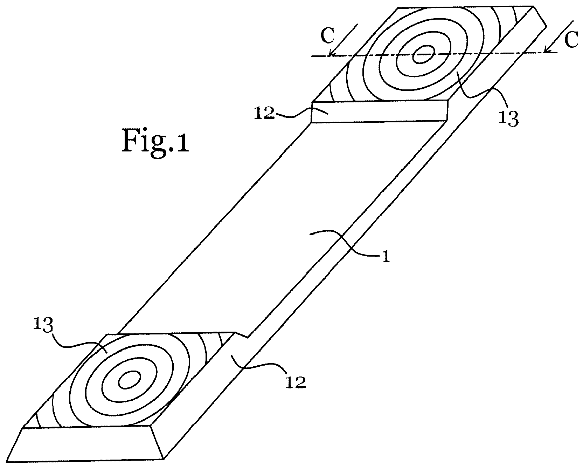

Fig. 1 zeigt die Oberseite der erfindungsgemäßen Unterlagsleiste 1 mit den erhöhten Auflageflächen 12 und dem Profil 13.

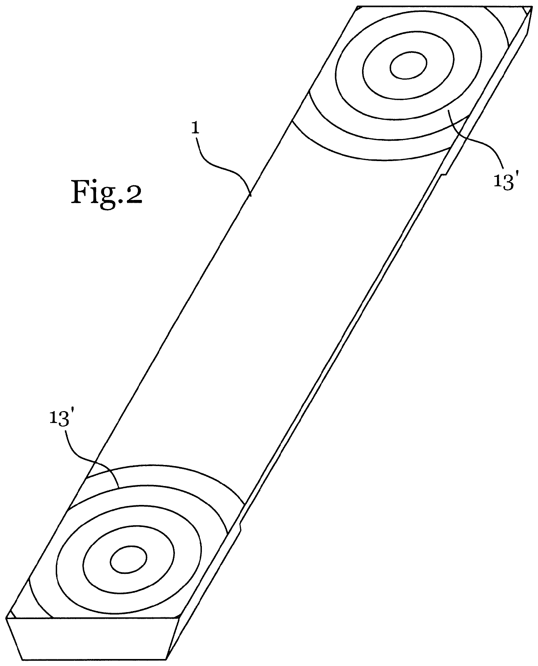

Fig. 2 zeigt die Unterseite mit dem gegengleichen Profil 13'.
Fig. 3 zeigt vier übereinandergestapelte Unterlagsleisten 1 zum Erhöhen oder verstauen.
Fig. 4 zeigt den trapezförmigen Querschnitt 11 mit den gegengleichen Profilen 13 und 13';
Fig. 5a - 5d zeigt eine weitere Ausführungsform einer erfindungsgemäßen Unterlagsleiste.

Die Unterlagsleiste 1 hat eine rechteckige Form und einen trapezförmigen Querschnitt 11. Die Unterlagsleiste 1 ist aus Silikon in einem, fugen- und ritzenfrei gegossen, welches die Rutschfestigkeit, Temperaturbeständigkeit, Chemikalienbeständigkeit und Lebensmittelechtheit gewährleistet. Kein Festsetzen von Schmutz findet statt und sie ist leicht von Hand zu reinigen.

Das Dämpfungsverhalten ist durch Stapeln der Unterlagsleiste 1 variierbar.

Auf der Oberseite der Unterlagsleiste 1 befinden sich zwei erhöhte Auflageflächen 12 mit jeweils einem erhabenen Profil 13.

Das Profil 13 ist in Form konzentrischer, an den Seitenkanten offener, kreisförmiger oder spiralförmiger Erhebungen ausgeführt.

Die Unterseite der Unterlagsleiste 1 ist mit einem gegengleichen Profil 13' versehen. Dieses Profil 13' ist in Form konzentrischer, an den Seitenkanten offener, kreisförmiger oder spiralförmiger Nuten ausgeführt. Beim Stapeln mehrerer Unterlagsleisten 1 greifen die gegengleichen Profile 13, 13' ineinander. Das führt zu einem stabilen Stapeln beim Erhöhen des Schneidbretts durch Übereinanderstapeln der Unterlagsleisten sowie zu einem Variieren des Dämpfungsverhaltens.

Die beiden erhöhten Auflageflächen 12 ergeben, bei zwei aufgelegten Unterlagsleisten 1, vier Auflageflächen auf denen auch ein gewölbtes Schneidebrett, mit der Wölbung nach unten, aufgelegt und verwendet werden kann. Das Schneidbrett liegt nicht stundenlang im Nassen sondern wird hinterlüftet.

Die Profile 13 an der Oberseite und die gegengleichen Profile 13' an der Unterseite verbessern das Haften bei nassen Bedingungen und ermöglichen stabiles Stapeln.

Eine Materialstärke von mindestens fünf Millimeter ergibt genügend Bodenfreiheit für rasches und leichtes Abheben des Schneidbrettes.

Weiters gewährleistet die Shorehärte des Silikons genug Steifigkeit für sicheres Platzieren in der Spülmaschine.

Durch den trapezförmigen Querschnitt 11 und die Shorehärte des Silikons weist die Unterlagsleiste 1 genügend Steifigkeit auf, um die Unterlagsleiste 1 auch für Wischvorgänge einzusetzen. Dazu nimmt man die Unterlagsleiste 1 längs hochkantig zwischen Daumen und Zeigefinger und zieht z.B. Schnittgut/Nässe vom Tisch ab. Weiters werden harte Schläge/Geräusche an dem Auflagegut durch die Unterlagsleiste 1 gedämpft.

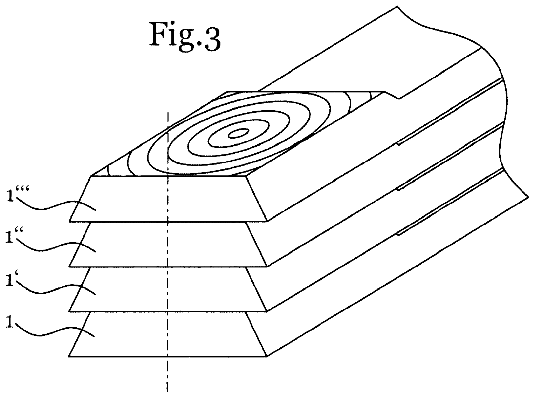

Fig. 3 zeigt eine schematische Darstellung eines Systems aus vier übereinandergestapelten Unterlagsleisten 1, 1', 1", 1"'. Die Profile an den Unterseiten greifen dabei jeweils in die Profile an den Oberseiten der darunterliegenden Unterlagsleisten ein, sodass die vier Unterlagsleisten formschlüssig verbunden sind. Die Unterlagsleisten 1, 1', 1", 1'" können sich in ihrer Dämpfung und in ihrer Dicke unterscheiden, sodass vom Benutzer eine gewünschte Arbeitshöhe und die gewünschte Dämpfungseigenschaft (hart, mittel, weich) durch Wahl der gestapelten Unterlagsleisten gewählt werden kann.

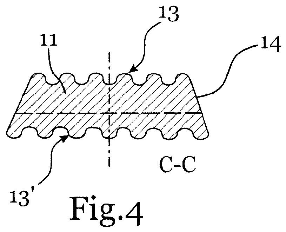

Fig. 4 zeigt einen Querschnitt durch eine Unterlagsleiste 1 mit trapezförmigem Querschnitt 11. Das Profil 13 an der Oberseite ist zum Profil 13' an der Unterseite gegengleich, sodass die Erhebungen an der Oberseite mit entsprechenden Nuten an der Unterseite in eine formschlüssige Vebrindung gebracht werden können. Die Längsseite 14 schließt zur Unterseite einen Winkel von etwa 70°ein.

Weiters haben bei dem dargestellten Ausführungsbeispiel sowohl die Längskanten im Bereich der Oberseite, als auch die Längskanten im Bereich der Unterseite eine Rundung, wodurch das Auftreten von Brüchen oder Rissen an den Kanten, welche die Ansiedlung von Keimen erleichtern würden, vermieden wird.

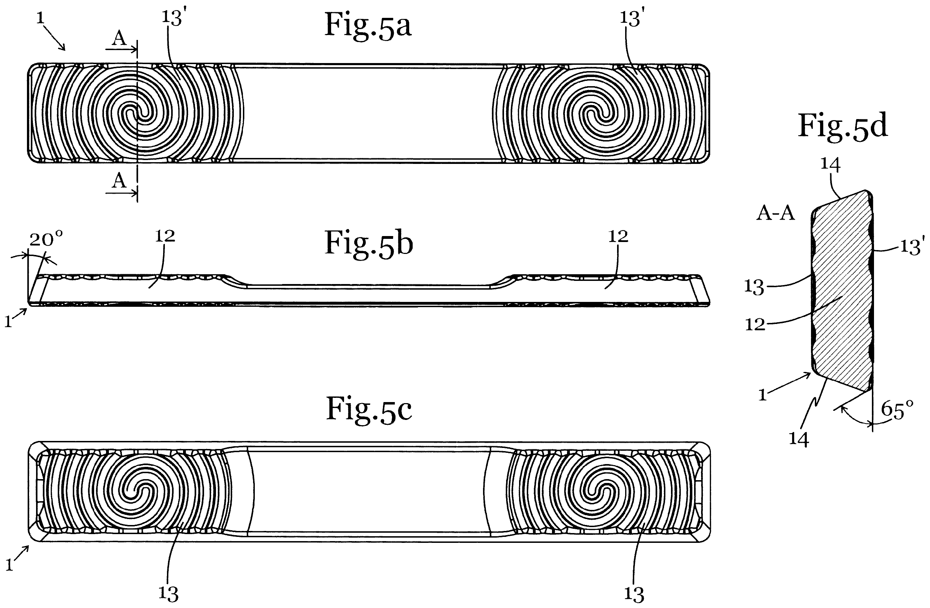

Fig. 5a - 5d zeigt eine weitere Ausführungsform der erfindungsgemäßen Unterlagsleiste. Fig. 5a zeigt eine Ansicht der Unterseite, Fig. 5b eine Ansicht von der Seite, Fig. 5c eine Ansicht der Oberseite, und Fig. 5d eine Schnittdarstellung. Das erhabene Profil und das vertiefte Profil sind in dieser Ausführungsform als gegengleiche Spiralen ausgeführt.

## Patentansprüche

1. Unterlagsleiste (1) aus Silikon mit einer Oberseite und einer im Wesentlichen planen Unterseite, wobei die Unterlagsleiste (1) an der Oberseite zumindest zwei erhöhte Auflageflächen (12) aufweist und die Auflageflächen (12) jeweils ein erhabenes Profil (13) aufweisen,
**dadurch gekennzeichnet, dass**,
an der Unterseite vertiefte Profile (13') vorgesehen sind, die im Wesentlichen gegengleich zu den erhabenen Profilen (13) ausgeführt sind, wobei das erhabene Profil (13) und/oder das gegengleiche vertiefte Profil (13') in Form seitlich offener konzentrischer Kreise oder in Form einer seitlich offenen Spirale ausgeführt ist.

2. Unterlagsleiste (1) nach Anspruch 1, **dadurch gekennzeichnet, dass** die Unterlagsleiste (1) einen trapezförmigen Querschnitt (11) aufweist, dessen Basis die Unterseite der Unterlagsleiste (1) bildet.

3. Unterlagsleiste (1) nach Anspruch 1 oder 2, **dadurch gekennzeichnet, dass** das erhabene Profil (13) an der Oberseite und das vertiefte Profil (13') an der Unterseite derart gegengleich ausgeführt sind, dass beim Übereinanderstapeln zweier Unterlagsleisten (1, 1') das erhabene Profil (13) der ersten Unterlagsleiste (1) in das vertiefte Profil (13') der zweiten Unterlagsleiste (1') formschlüssig in Eingriff bringbar ist.

4. Unterlagsleiste (1) nach einem der Ansprüche 1 bis 3, **dadurch gekennzeichnet, dass** die Dicke der Unterlagsleiste im Bereich der erhöhten Auflageflächen (12) mehr als 8mm, bevorzugt 9mm bis 14mm beträgt, und die Dicke der Unterlagsleiste im Bereich außerhalb der erhöhten Auflageflächen (12) weniger als 8mm, bevorzugt 5mm bis 7mm, beträgt.

5. Unterlagsleiste (1) nach einem der Ansprüche 1 bis 4, **dadurch gekennzeichnet, dass** die Längsseite (14) der Unterlagsleiste (1) mit der Unterseite der Unterlagsleiste (1) einen Winkel von 60° bis 80°, bevorzugt 70°, einschließt.

6. Unterlagsleiste (1) nach einem der Ansprüche 1 bis 5, **dadurch gekennzeichnet, dass** die Längskante der Unterlagsleiste (1) im Bereich der Unterseite eine die Steifigkeit erhöhende Verstärkung aufweist.

7. Unterlagsleiste (1) nach einem der Ansprüche 1 bis 6, **dadurch gekennzeichnet, dass** der Querschnitt der Unterlagsleiste (1) kreissegmentförmig, halbkreisförmig, halbkreisförmig mit einer parallel zur planen Unterseite verlaufenden Abflachung, halbovalförmig mit einer parallel zur planen Unterseite verlaufenden Abflachung, oder mehreckig ausgeführt ist.

8. Unterlagsleiste (1) nach einem der Ansprüche 1 bis 7, **dadurch gekennzeichnet, dass** die Längskante der Unterlagsleiste (1) im Bereich der Oberseite und/oder im Bereich der Unterseite eine Rundung aufweist.

9. Unterlagsleiste (1) nach einem der Ansprüche 1 bis 8, **dadurch gekennzeichnet, dass** die Unterlagsleiste Silikon mit einer Härte im Bereich von 20 Shore-A bis 90 Shore-A, vorzugsweise 60 Shore-A umfasst.

10. System aus mehreren Unterlagsleisten (1) nach einem der Ansprüche 1 bis 9, **dadurch gekennzeichnet, dass** die Unterlagsleisten (1) unterschiedliche Dicke aufweisen.

11. System aus mehreren Unterlagsleisten (1) nach einem der Ansprüche 1 bis 9, **dadurch gekennzeichnet, dass** die Unterlagsleisten (1) zur Anpassung der Dämpfung unterschiedliche Härte aufweisen.

12. Verwendung mehrerer Unterlagsleisten (1) nach einem der Ansprüche 1 bis 9, wobei die Unterlagsleisten (1) beliebig übereinander gestapelt werden.

## Claims

1. An underlay bar (1) consisting of silicone with a topside and an essentially planar underside, wherein the underlay bar (1) comprises at least two raised support surfaces (12) on the topside and wherein the support surfaces (12) each comprise a raised profile (13),
**characterised in that** recessed profiles (13') are provided on the underside, which are essentially mirror-inverted to the raised profiles (13), wherein the raised profile (13) and/or the mirror-inverted recessed profile (13') are designed in the form of laterally open concentric circles or in the form of a laterally open spiral.

2. The underlay bar (1) according to claim 1, **characterised in that** the underlay bar (1) comprises a trapezoidal cross-section (11), the base of which is formed by the underside of the underlay bar (1).

3. The underlay bar (1) according to claim 1 or 2, **characterised in that** the raised profile (13) on the topside and the recessed profile (13') on the underside are mirror-inverted in such a way that when two underlay bars (1, 1') are stacked on top of each other the raised profile (13) of the first underlay bar (1) can be brought into engagement with the recessed profile (13') of the second underlay bar (1') in a form-locked manner.

4. The underlay bar (1) according to one of claims 1 to 3, **characterised in that** the thickness of the underlay bar in the area of the raised support surfaces (12) is more than 8mm, preferably 9mm to 14mm, and the thickness of the underlay bar in the area outside the raised support surfaces (12) is less than 8mm, preferably 5mm to 7mm.

5. The underlay bar (1) according to one of claims 1 to 4, **characterised in that** the longitudinal side (14) of the underlay bar (1) encloses an angle of between 60° and 80°, preferably 70° with the underside of the underlay bar (1).

6. The underlay bar (1) according to one of claims 1 to 5, **characterised in that** the longitudinal edge of the underlay bar (1) in the area of the underside comprises a reinforcement increasing the stiffness.

7. The underlay bar (1) according to one of claims 1 to 6, **characterised in that** the cross-section of the underlay bar (1) may be shaped as a circle segment, a semi-circle, a semi-circle with a flattening extending in parallel to the planar underside, a semi-oval with a flattening extending in parallel to the planar underside, or a polygon.

8. The underlay bar (1) according to one of claims 1 to 7, **characterised in that** the longitudinal edge of the underlay bar (1) is rounded in the area of the topside and/or in the area of the underside.

9. The underlay bar (1) according to one of claims 1 to 8, **characterised in that** the underlay bar comprises silicone with a hardness in the range of 20 Shore-A to 90 shore-A, preferably 60 Shore-A.

10. A system consisting of several underlay bars (1) according to one of claims 1 to 9, **characterised in that** the underlay bars (1) comprise different thicknesses.

11. A system consisting of several underlay bars (1) according to one of claims 1 to 9, **characterised in that** the underlay bars (1) vary in hardness for adjusting damping.

12. Use of several underlay bars (1) according to one of claims 1 to 9, wherein the underlay bars (1) are stacked at random on top of each other.

## Revendications

1. Baguette de support (1) en silicone, avec une face supérieure et une face inférieure sensiblement plane, sur la face supérieure, la baguette de support (1) comportant au moins deux surfaces d'appui (12) surélevées et les surfaces d'appui (12) présentant chacune un profilé en relief (13),
**caractérisée en ce que** sur la face inférieure sont prévus des profilés approfondis (13'), qui sont réalisés sensiblement de manière diamétralement opposée aux profilés en relief (13), le profilé en relief (13) et/ou le profilé approfondi (13') diamétralement opposé étant réalisé sous la forme de cercles ouverts sur le côté ou sous la forme d'une spirale latéralement ouverte.

2. Baguette de support (1) selon la revendication 1,
**caractérisée en ce que** la baguette de support (1) présente une section transversale trapézoïdale (11), dont la base forme la face inférieure de la baguette de support (1).

3. Baguette de support (1) selon la revendication 1 ou 2,
**caractérisée en ce que** le profilé en relief (13) sur la face supérieure et le profilé approfondi (13') sur la face inférieure sont réalisés de manière diamétralement opposée de telle sorte que lors de l'empilage de deux baguettes de support (1, 1'), le profilé en relief (13) de la première baguette de support puisse être amené en engagement par complémentarité de forme dans le profilé approfondi (13') de la deuxième baguette de support (1').

4. Baguette de support (1) selon l'une quelconque des revendications 1 à 3, **caractérisée en ce que** l'épaisseur de la baguette de support dans la région des surfaces d'appui (12) surélevées est de plus de 8 mm, de préférence de 9 mm à 14 mm et l'épaisseur de la baguette de support dans la région en dehors des surfaces d'appui (12) surélevées est de moins de 8 mm, de préférence de 5 mm à 7 mm.

5. Baguette de support (1) selon l'une quelconque des revendications 1 à 4, **caractérisée en ce que** le côté longitudinal (14) de la baguette de support (1) forme avec la face inférieure de la baguette de support (1) un angle de 60° à 80°, de préférence de 70°.

6. Baguette de support (1) selon l'une quelconque des revendications 1 à 5, **caractérisée en ce que** dans la région de la face inférieure, l'arête longitudinale de la baguette de support (1) comporte un renfort augmentant la rigidité.

7. Baguette de support (1) selon l'une quelconque des revendications 1 à 6, **caractérisée en ce que** la section transversale de la baguette de support (1) est réalisée en forme d'arc de cercle, de demi-cercle, de demi-cercle avec un méplat s'écoulant à la parallèle de la face inférieure plane, de demi ovale avec un méplat s'écoulant à la parallèle de la face inférieure plane, ou de polygone.

8. Baguette de support (1) selon l'une quelconque des revendications 1 à 7, **caractérisée en ce que** dans la région de la face supérieure et/ou dans la région de la face inférieure, l'arête longitudinale de la baguette de support (1) comporte un arrondi.

9. Baguette de support (1) selon l'une quelconque des revendications 1 à 8, **caractérisée en ce que** la baguette de support comporte de la silicone d'une dureté dans l'ordre de 20 Shore A à 90 Shore A, de préférence de 60 Shore A.

10. Système composé de plusieurs baguettes de support (1) selon l'une quelconque des revendications 1 à 9,
**caractérisée en ce que** les baguettes de support (1) présentent différentes épaisseurs.

11. Système composé de plusieurs baguettes de support (1) selon l'une quelconque des revendications 1 à 9,
**caractérisée en ce que** pour adapter l'amortissement, les baguettes de support (1) présentent différentes duretés.

12. Utilisation de plusieurs baguettes de support (1) selon l'une quelconque des revendications 1 à 9, sachant qu'on empile à volonté les unes sur les autres les baguettes de support (1).
